# EUROPEAN PATENT APPLICATION

(11) **EP 4 029 617 A1**
(43) Date of publication of application: **20.07.2022**
(21) Application number: 22151366.6
(22) Date of filing: 13.01.2022
(51) Int. Cl.: B09B 1/00, B09B 5/00, B09C 1/08, B09C 1/10, C04B 28/02, E21F 15/00, C04B 111/00

(54) **ENVIRONMENTAL STABILIZATION AND BACKFILLING OF MINES AND/OR EXCAVATED UNDERGROUND SPACES**

(30) Priority: 14.01.2021 EP 21151623
(71) Applicant: Styriakova, Darina, 04013 Kosice (SK)
(72) Inventor: Styriakova, Darina, 04013 Kosice (SK)
(74) Representative: Gille Hrabal Partnerschaftsgesellschaft mbB Patentanwälte

(57) **Abstract**

Disclosed is a method for backfilling a mine and/or of excavated spaces of a soil, in particular of an acidic soil, comprising at least the following process steps:
a) providing a carrier material;
b) inoculating the carrier material provided in step a. with a solution of microbial consortia; and
c) filling the excavated areas of the mine and/or soil with the inoculated carrier material of step b,
characterized in that the carrier material contains liquid soil and organic components as nutrient for the microbial consortia.

## Description

The present invention relates to a process for filling abandoned mining operations and/or excavated spaces by using associated contaminated or non-contaminated excavated soils, in particular tailings, excavation material, minerals, and the like, in form of liquid soil, comprising organic waste material and microbial consortia. The process intends to stabilize effectively the weathering processes as well as the hydrological regime in such mines and/or excavated spaces above and below ground seepage water outlets as well as the complete or partial filling of mines and/or excavated spaces and shaft encapsulation. The process involves in general the biochemical precipitation or sorption of toxic elements and the neutralization of acidic or polluted water that enters the system.

### Discussion of prior art

Mining has created large underground excavation spaces worldwide. Over time, the relief of the earth's surface changes, broken ravines are formed and residential areas are endangered. In particular, ore and hard coal mining have left large underground cavities, but also heaps and other mining facilities. Old drainage tunnels, which allowed mining at greater depths, also change the hydrogeological flow of groundwater (underground drainage), the qualitative chemical composition of the water, and lead to the gradual formation of a large amount of acidic mining water and sediments containing toxic elements. Also, excavation works at acidic soils are responsible for oxidation of sulphite minerals due to contact with oxygen and thus creation of acid drainage releasing heavy metals to the surrounding environment. Acid Mine Drainage (AMD) occurs where access of oxidants to sulphide minerals is enabled due to mining operations or excavation of sulphidic minerals in soils as the surface area of the minerals is increased, whereby inorganic and biological reactions promote the acidification and heavy metal contamination of water due to oxidation of sulphide minerals. From the seepage streams of mining (Acid Mine Drainage (AMD) and Acid Rock Drainage (ARD, seepage streams from excavated material/soil), poisonous elements find their way into underground and surface streams in both soluble and solid states. One further consequence is the contamination of surface and groundwater. Furthermore, solids settle in the riverbeds and gradually dissolve, causing environmental pollution.

In underground mines, in which the work method requires the filling of excavated areas, it is common to return the mill residues underground ("backfilling"). This method has been used in South African gold mines since the beginning of the 20th century [Stradling, A.W., Backfill in South Africa: developments to classification systems for plant residues. Miner. Eng. 1 (1), (1988), 31¬-40] and is now used in many modern underground mines worldwide. During backfilling, residues or waste rock mixed with water, with or without hydraulic binders, is returned to the empty tunnels. After a hardening time of a few months, the backfill can serve as effective soil support and enable the extraction of ores from neighbouring tunnels that would otherwise have been left behind as soil support. The backfilling of excavated tunnels also reduces the volume of debris that has to be dammed up on the surface. As a rule, 40 to 60 % of all residues produced by the mine can be returned underground as backfill, which considerably reduces the space required for damming the residue surface [Barry A. Wills, James A. Finch FRSC, FCIM, P. Eng., in Wills' Mineral Processing Technology (Eighth Edition), 2016]. Backfilling is also widely used in excavation works. However, once this technology is used in acidic soils problems occur. That said, this process only solves the geotechnical stabilization of mining or excavation operations and not the biochemical weathering processes, the activity of which leads to the formation of mining and/or acidic waters containing toxic elements that pollute the environment. This region of mine or sulphidic soil becomes or remains a potential biological activity zone with microbial chemolithotrophic consortia of the *Acidithiobacillus albertensis, Acidithiobacillus caldus, Acidithiobacillus ferridurans, Acidithiobacillus ferriphilus, Acidithiobacillus ferrivorans, Acidithiobacillus ferrooxidans, Acidithiobacillus thiooxidans* with producing acid mine/rock drainage.

Conventional methods of removing the toxic elements from drainage of acid mines, sewage, contaminated natural waters and soils include chemical precipitation [Aziz et al. (2008), Heavy metals (Cd, Pb, Zn, Ni, Cu and Cr(III)) removal from water in Malaysia, Post treatment by high quality limestone; Bioresource Technology 99, 1578-1583], electroflotation [Belkacem et al. (2008), Treatment characteristics of textile wastewater and removal of heavy metals using electroflotation technique; Desalination 228, 245-254], ion exchange [Smara et al. (2007), Removal of heavy metals from diluted mixtures by a hybrid ion-exchange electrodialysis process; Separation and Purification Technology 57, 103-110], reverse osmosis [Kurniawan et al. (2006), Physico-chemical treatment techniques for wastewater laden with heavy metals; Chemical Engineering Journal 118, 83-98; Huang et al. (2011), Fenton-biological treatment of reverse osmosis membrane concentrate from a metal plating wastewater recycle system; Environmental Technology 32,515-522] and adsorption on activated carbon and biosorbents [Cimino et al. (2005), Characterization of carbons from olive cake by sorption of wastewater pollutants; Chemosphere 61, 947-955; Wang and Chen (2006), Biosorption of heavy metals by Saccharomyces cerevisiae: A review; Biotechnology Advances 24, 427-451; Park et al. (2011), Biosorption and growth inhibition of wetland plants in water contaminated with a mixture of arsenic and heavy metals; Engineering in Life Sciences 11, 84-93].

However, due to operational deficiencies, high treatment costs and the generation of toxic chemical sludges, more environmentally friendly technologies have long been tried. A better approach than these traditional methods is to bind toxic elements from drainage of acid mines, sewage, contaminated natural waters and soils or to convert them into less harmless substances [Vidali (2001), Bioremediation: An overview; Pure and Applied Chemistry 73, 1163-1172].

Bioremediation is an option that offers the possibility to make less harmless various toxic elements contaminants using natural biological activity [Vidali, M., Bioremediation: An overview // Pure Applied Chemistry. - Vol. 73 Nº 7. (2001), p. 1163- 1172; Harms, H., Schlosser, D., Wick, L.Y., Untapped potential: exploiting fungi in bioremediation of hazardous chemicals, Nature Rev. Microbiol. 9 (2011) 177-192]. Bioremediation is the use of living organisms, in particular microorganisms, to degrade the environmental contaminants into less toxic and harmless forms. Contaminant species are transformed by living organisms through biochemical reactions that take place as a part of their metabolic processes, and the biodegradation/biostabilization of a compound is often a result of the actions of multiple organisms or bioaugmented microbial consortia [Berthe-Corti et al. (2007), Bioremediation and bioaugmentation of soils contaminated with polyaromatic hydrocarbons; Current trends in Microbiology 3, 1-30; Pant and Pant (2010), A review: Advances in microbial remediation of trichloroethylene (TCE); Journal of Environmental Science 22,116-126]. There are many well established bioremediation technologies applied at contaminated sites [Khan and Anjaneyulu (2006), Bioremediation of contaminated soil and sediment by composting; Remediation Journal 16, 109-122; Harms et al. (2011), Untapped potential: exploiting fungi in bioremediation of hazardous chemicals; Nature Reviews Microbiology 9, 177-192].

Microbial consortia play a crucial role in decomposition of organic source and remediation and are known to accelerate complicated tasks that allow the survival of microorganisms in hostile environments such as the AMD and can be more robust to environmental fluctuations [Brune and Bayer, (2012), Engineering microbial consortia to enhance biomining and bioremediation; Front. Microbiol. 3:203. doi: 10.3389/fmicb. 2012.00203]. They have been successfully applied to real world problems and facilitate complex functions involving inter-species interactions that enable their survival in acid mine environment [Keller and Surette, (2006), Communication in bacteria: an ecological and evolutionary perspective; Nat. Rev. Microbiol. 4, 249-258. doi: 10.1038/ nrmicro1383]. Simultaneous removal of toxic metals and sulphate from contaminated environment can be achieved using the combination of specific properties of these organisms and interacting metals [Dunbar, (2017), Biotechnology and the mine of tomorrow; Trends Biotechnol. 35, 79-89. doi: 10.1016/j.tibtech.2016.07.004].

The Acid Mine Drainage (AMD) remediation with sulphate reducing bacteria (SRB) is usually based on mixtures of salts and locally available organic substrates such as manures, sawdust, spent mushroom compost, sugarcane waste, wood chips, yeast extract and other carbon sources for bacteria metabolism. The optimization of these mixtures is important in order to achieve maximum metal and sulphate removal [Kefeni et al., (2017), Acid mine drainage: prevention, treatment options, and resource recovery: a review; J. Clean. Prod. 151, 475-493. doi: 10.1016/j.jclepro.2017.03.082]. The addition of organic matter and calcium carbonate helps to reduce the initial pH of AMD that affects the growth of SRB. The mechanism of remediation involves the conversion of sulphate to hydrogen sulphide and conversion of organic matter to hydrogen carbonate. Heavy metal ions present then reacts with the hydrogen sulphide gas produced to form insoluble metal sulphide precipitates and the metals are removed through sulphide precipitation [Kefeni K. K., Msagati T. A. M., Mamba B. B. (2017), Acid mine drainage: prevention, treatment options, and resource recovery: a review. J. Clean. Prod. 151 475-493].

CN 110877047 A describes a process of backfilling an abandoned mine by digging a plurality of deep pits in the soil of a mining area, adding sequentially, a physical adsorbent, such as activated carbon, biologically active bacteria, in particular yeast and cyanobacteria, and a chemical adsorbent, into the deep pit; backfilling the pit with soil, and covering the surface of the backfilled deep pit with an alkaline soil conditioner. Thereby, the order of the addition in the described method is very important. However, according to this method the excavated areas of the mine are not filled, but rather new pits are dug in the soil of the mining area in which the aforementioned components are placed in the specific order. No statical stabilization of the mine is achieved or at least is in the focus of this method, nor the formation of future Acid Mine Drainage is prevented. Furthermore, no tailings or waste material is used for backfilling the mine.

KR 20060081593 A relates to an In-Adit-Sulphate-Reducing System (IASRS) for purifying the acid mine drainage (AMD) through the use of sulphate-reducing bacteria (SRB) by passing the acid mine drainage through a plurality of organic material filling layers and by keeping a constant temperature for the organic material filling layers so as to efficiently perform the neutralization and the precipitation of heavy metals contained in acid mine drainage. However, the IASRS method requires a constant adding of SRB in the system and will only temporarily solve the problem of acid mine water, since when the gravel layer with metal precipitates becomes clogged, it will be necessary to be replaced and a new problem of storing contaminated gravel arises then.

CN 101037268 A relates to a method for restoring the ecological environment of a mine, including the treatment of environmental pollution in the mine. Thereby, the method is characterized in that the ore dressing wastewater, smelting wastewater, acidic pit water, ore dump leachate and waste rock, tailings and smelting slag produced in the mine development are injected into the tailings pond, the tailings pond is inoculated with sulphate-reducing bacteria and organic matter that can be degraded by micro-organisms, the amount of organic matter added being based on the anaerobic environment at the water-solid interface in the tailings pond and the redox potential required for sulphate reduction by sulphate-reducing bacteria. That said, it is disclosed that the tailings are treated in separate ponds, and not in-situ in the mine or soil.

WO 02/28783 A discloses a process for in situ immobilization of metals in a large body of water having metals therein and having a border of soil or earth materials, wherein the body of water has regions of varying density. The method comprises the steps of determining a density mean within the body of water; introducing into the body of water a treatment substance having a density greater than that of the density mean, the treatment substance including at least one microbe nutrient to sustain activity of at least one microbe and the treatment substance having a density greater than the greatest density of water regions of varying density; providing at least one microbe proximate to or in the body of water to receive treat-ment substance therefrom, the at least one microbe being capable of growing in the presence of the treatment substance; producing microbial sulfides that are sulfide by-products of microbial activity in the body of water; reacting the microbial sulfides in situ with metal ions or metal-containing compounds contained in the body of water to form metal sulfides; reducing solubility of the metal ions or metal-containing compounds contained in the body of water as a result of forming the metal sulfides; and inhibiting the migration rate of metal ions or metal-containing compounds within or from the soils or earth materials. US 2019/308229 A1 discloses a method for using mine waste as a raw material to manufacture a mine filling product for use as a suitable precursor product or mine filling product to be used as a backfill material to close a mine. Specifically hazardous heavy metals are reduced or neutralized by the described method. This prior art, however, does not suggest to use bacteria supplementation of the mine waste as the organisms may be taxis to external stimuli, such as food source and oxygen levels, and therefore difficult to control and facilitate their desired in-mine living conditions suitable to sustainable propagation of the selected species and strains.

WO 2009/038851 A discloses a method of preventing acid mine drainage by comprising the step of injecting a microbial inoculum into said at least one treatment area of said acid mine drainage generation source and specifies the preferred use of metal-reducing or sulphate-reducing microbial consortia.

COSTA MC ET AL: "Treatment of Acid Mine Drainage by Sulphate-reducing Bacteria Using Low Cost Matrices" (WATER, AIR, AND SOIL POLLUTION, KLUWER ACADEMIC PUBLISHERS, DO, vol. 189, no. 1-4, 2007-12-14, pages 149-162) discloses the use of sulphate reducing bacteria for the precipitation of heavy metals as an alternative for the decontamination of acid mine drainage) by using anaerobically generated sulphide.

US 10 052 668 A discloses a process for treating waste from a pithead power plant and sequestrating carbon dioxide discharged therefrom.

CN 111 825 400 A discloses a foaming reinforcement filling material for coal mines, which is composed of a mixture of raw materials comprising fast gelling materials, concrete admixtures, stearate foam stabilizers, inorganic foaming agents and foaming stimulants.

None of the methods described above are satisfactory regarding the simplicity and effectiveness under ecological considerations.

Moreover, the known methods according to the prior art are not fully useful in permanently stabilizing (biochemically and statically) abandoned mines and excavated spaces in acidic soils, which preferably allow at the same time the removal of surface pollution.

Thus, there remains the need to provide a simple and effective ecological method for permanently stabilizing (biochemically and statically) abandoned mines or excavated spaces in acidic soils, which preferably allow at the same time the removal of surface pollution.

### Objective technical problem of the present invention

Starting from this prior art situation, one objective of the present invention is to provide a method for a geodynamic and, at the same time, biochemical stabilization of mines and/or excavated spaces, preferably in acidic soils.

In particular, one objective of the present invention is to provide a method for backfilling mines and/or excavated spaces, preferably in acidic soils, in a way that the toxic material of the acid drainage is biostabilized.

Furthermore, it is an objective of the present invention to provide a method for backfilling mines and/or excavated spaces in which the acidity is essentially neutralized in the mine/excavated spaces resp. in which the acidity is essentially neutralized in the in-situ in the mine/excavated spaces. Thereby, an in-situ neutralisation is in particular requested.

Moreover, it is an objective of the present invention to provide a method for backfilling mines and/or excavated spaces, preferably in acidic soils, in which the formation of future acid drainage is essentially prevented.

Furthermore, it is an objective of the present invention to provide a method for backfilling mines and/or excavated spaces, preferably in acidic soils, which ensures the continuous and autonomous bioremediation of toxic material.

Furthermore, it is an objective of the present invention to provide at the same time a method for complete or partial filling of mines and/or excavated spaces, preferably in acidic soils, and shaft encapsulation for statical stabilization of said mines and/or excavated spaces.

Finally, it is an objective of the present invention to provide a method for backfilling mines and/or excavated spaces, preferably in acidic soils, in which waste material from surface pollution can be used.

### Solution of the objective problem

These problems are now solved by a method for backfilling a mine and/or of excavated spaces of a soil, in particular of an acidic soil, comprising at least the following process steps:
a) providing a carrier material;
b) inoculating the carrier material provided in step a. with a solution of microbial consortia; and
c) filling the excavated areas of the mine and/or soil with the inoculated carrier material of step b.

The process according to the present invention is characterized in that the carrier material contains liquid soil and organic components as nutrient for the microbial consortia.

Liquid soil in the sense of the present invention is a flowable filler material or rather a temporarily flowable filler material. The present invention in particular refers to the Definition of RSS Flussigboden^{®} by RAL Gütegemeinschaft Flüssigboden e. V. (RAL-GZ 507 (RAL-GZ 507)) according to which the liquid soil is categorized as a temporarily flowable filling material (TFFM). TFFM are soils and building materials with binding agents, which are used for backfilling in areas that are difficult to access or difficult to compact. They flow without influence of additional compression energy, solely under the influence of gravity, and completely fill cavities and spaces. After a defined period of time, the filling construction materials have mechanical and physical properties appropriate for the application and guarantee them over the long term. They retain typical properties of soil without forming rigid structures of hydraulic binding agents such as cement. The liquid soil to be used according to the present invention is a temporarily flowable, self-compacting materials selected from the following two subgroups:
(1) cohesive, frictional reconsolidating material without foreign structures;
(2) hydraulic binding materials with forcing rigid foreign structures (such as cement structures).

The technology of liquid soil was developed in Germany in the years starting from 1998. According to this, a mixture of excavated soil material, additives selected from the group consisting of plasticizers, accelerators, stabilizers and or/mixtures thereof, as well as added water is made flowable in order to use it for backfilling or installation of underground components. In special cases of the present invention, other materials - such as untreated or pre-treated sewage sludge - can be added to specifically change individual properties. This manufacturing process makes it possible to make any types of excavated soil, industrially produced and natural aggregates, as well as other mineral substances temporarily flowable.

In an embodiment of the present invention, a mixture of excavated soil material along with cement, bentonite, up to 10 % of organic material, and water (along with soil) is used.

The main idea of the liquid soil method was to make any types of excavated soil, industrially produced and natural aggregates, as well as other mineral substances temporarily flowable, to build them back in self-compacting and to restore soil-like to ground-level conditions in terms of soil mechanics and soil physics. Thus, liquid soil belongs to the group of temporarily flowable, but then self-compacting materials, and retains typical soil properties without forming rigid structures from the hydraulic binders such as cement.

A large amount of waste has been and continues to be stored on the earth surface through mining and metallurgical activities, causing permanent pollution of the environment. In addition, the disposal of other waste of a similar magnitude, such as contaminated soils that are deposited in landfills, as well as sewage sludge, which is spread on agricultural areas or thermally treated, is increasingly being questioned or prohibited due to the negative environmental impact.

According to the present invention, all these (waste) components in one constellation or another can form - in combination with tailings, excavation material, minerals and the like as well as microbial consortia - a suitable mineralogical raw material for the liquid soil to be used in the present invention, which stabilizes effectively the weathering processes as well as the hydrological regime in mines above and below ground seepage water outlets.

In a first aspect of the present invention, the liquid soil comprises components selected from the group consisting of tailings, excavation material, minerals, minerals separations residues, overburden from previous mining or processing, overburden from actual mining or processing, contaminated rocks or non-contaminated rocks, soil, sediments, limestone, lime slag, and mixtures thereof.

Tailings, in the sense of the present invention, are the materials left over after the process of separating the valuable fraction from the uneconomic fraction (gangue) of an ore. Tailings are distinct from overburden, which is the waste rock or other material that overlies an ore or mineral body and is displaced during mining without being processed.

Sediment, in the sense of the present invention, is a naturally occurring material that is broken down by processes of weathering and erosion, and is subsequently transported by the action of wind, water, or ice or by the force of gravity acting on the particles.

Limestone is a carbonate sedimentary rock that is often composed of the skeletal fragments of marine organisms such as coral, foraminifera, etc. About 10% of sedimentary rocks are limestones. Pulverized limestone is used as a soil conditioner to neutralize acidic soils.

Lime slag or slag is the glass-like by-product left over after a desired metal has been separated (i.e., smelted) from its raw ore. Slag is usually a mixture of metal oxides and silicon dioxide. Ground granulated slag is often used in concrete. Lime (or calcite) is used in the steel industry because of its flux action which allows it to lower the concentration of impurities in the steel (above all silica and alumina, but also sulphur, phosphorus etc.) and so produce slag.

In a further aspect of the present invention, the liquid soil further contains at least one component selected from the group consisting of bentonite, cement, clays, carbonates, geopolymers and mixtures thereof.

The presence of bentonite and cement or geopolymers as binders in the liquid soil are of great importance, since they are contributing to the self-compacting properties of it. According to the present invention, all toxic components are stabilized in liquid soil with a minimal admixture of bentonite or various clays and an admixture of cement or geopolymers or various carbonates, depending on the specific mineralogical composition of the mining work and the acidity of the seeping mining water.

In a preferred embodiment, the liquid soil contains at least one component selected from the group consisting of bentonite, cement, clays, carbonates, geopolymers and mixtures thereof in an amount of 0.1 to 10 wt.-% with regard to the total content of the liquid soil.

That said, the present invention relates in particular to the above-mentioned process in which the backfilling of a mine is carried out, the process comprising at least the following process steps:
a) providing a carrier material;
b) inoculating the carrier material provided in step a. with a solution of microbial consortia; and
c) filling the excavated areas of the mine with the inoculated carrier material of step b,
whereby the carrier material contains
▪ tailings, excavation material, minerals, minerals separations residues, overburden from previous mining or processing, overburden from actual mining or processing, contaminated rocks or non-contaminated rocks, soil, sediments, limestone, lime slag, and mixtures thereof,
▪ at least one additive selected from the group consisting of plasticizers, accelerators, stabilizers and or/mixtures thereof, as well as
▪ water,
▪ and organic components as nutrient for the microbial consortia,
whereby the carrier material is made flowable.

The liquid soil to be used in the present invention is described further in the following:
Starting material

The starting material for the production of liquid soil is any type of excavated soil or other mineral material. Liquid soil to be used in the present invention can be produced not only from any excavated soil, but also from selected recycled material without residual hydraulic constituents or constituents that change the moisture balance in an unplanned manner, and from other suitable bulk materials.

### Additives

Additives used in liquid soil are specific plasticizers, accelerators, and specific stabilizers that can be described as soil-like because they consist of materials that also occur naturally in the soil (e.g., clay minerals), as well as added water and, if necessary, special lime. Additives of a type and quantity that force the formation of macroscopic, rigid, interlinked, solid foreign structures in the soil that superimpose the properties of the parent material and thus have very little deformation are usually unsuitable.

### Plasticizer

The additive that enables the temporary flowability of a backfill material made of soil etc. is called a "plastificator". A plastificator has the task of keeping the added water in the flowable state of the liquid soil in the soil matrix (retention capacity). A plasticizer thus also enables the formation of a water film or sliding layers between the soil particles and thereby the temporary flowability of the corresponding soil matrix. Plasticizers can be, for example, cellulose derivatives, bentonite suspensions, chemical superplasticisers and special layer minerals. Their suitability must be tested and proven in each individual case. Specifically modified layer minerals have proven to be suitable as plasticizers for liquid soil. Even in small quantities, these can absorb even higher quantities of water from a soil in a stable manner and permanently under installation conditions.

### Accelerators

Hydraulic accelerators are mostly used as accelerators. Other materials are also suitable as accelerators, but at present they are usually considerably less economical. Hydraulic accelerators are cements that have a suitable and specially required hydration process. They extract water from the added plasticizer at an accelerated rate and at a defined point in time. As a result, the sliding layers are broken down and frictional force is created on the soil particles of the liquid soil matrix. Consequently, the previously flowable material becomes plastic. Afterwards, the remaining added water is permanently absorbed and bound by the "stabilizer", which is also added to the process.

As a result of the plasticization, which can be controlled within predefined limits, the early loadbearing capacity of a "liquid soil" can be specifically adjusted and, if necessary, changed within certain limits. Cement accelerators may only be used in such a way that the so-called "cement point" is safely undershot. As the cement point is exceeded, the cement paste structures begin to cross-link increasingly. As a result, the soil matrix becomes increasingly interspersed with a rigid, non-soil lattice structure. As a result, the structural properties of these constraining structures of the now hydraulically bound material increasingly override the properties of the soil used.

### Stabilizer

An additive that further reduces the plasticity of the liquid soil introduced into the excavation pit, which has already been brought about by an accelerator, and thus promotes reconsolidation with the initial properties of the soil, is called a stabilizer. Cements and other hydraulic binders are unsuitable as stabilizers because they lead to the formation of rigid foreign structures in the soil. An area filled with such a material behaves like a foreign body (e.g. under a road), which characterises the well-known damage patterns of damaged roads. Only liquid soil as a soil-like backfill material makes it possible to avoid such damage.

### Water and lime

Additive water is the amount of water added to the liquid soil (depending on the required consistency) to make it temporarily flowable. Special lime is used to condition extremely clayey or moist and free-flowing soils. Its special properties prevent uncontrolled post-hardening (pozzolanic reaction), as can be observed from time to time with conventional liming of such soils.

The liquid soil is prepared by a process which enables excavated soil to first be brought into a plastic to flowable state by mixing it with additives and water, and then to be reconsolidated with the soil-mechanically relevant properties of the original material or with specifically modified properties. Liquid soil has special, time-dependent properties. The consistency during processing can be adjusted from flowable to plastic. The "reconsolidation" takes place on the basis of permanently stable water bonds in the soil matrix or due to the structures of the added layer minerals.

In a preferred embodiment of the present invention, the liquid soil to be used possess one or more of the following characteristics (according to RAL GZ 507 depending on the soil classification according to DIN 18196 (of the original soil)):
▪ Bulk density: 1.6 - 2.4 kg/dm³ (installation / final state largely identical);
▪ Compressive strength according to DIN EN 18136 and depending on the respective soil and are between, e.g. 0.1 to 0.8 N/mm² (depending on the nominal value determination);
▪ Solubility according to DIN 18300: soil class 3 to 5 (depending on the nominal value determination);
▪ Ev2 value according to DIN 18134: after 28 d > 45 MN/m²;
▪ Water permeability according to DIN 18310: 10⁻⁵ to 10⁻¹⁰ m/s (depending on target value determination)
▪ Environmental and water harmlessness according to the verification required by RAL Quality Mark 507.

Due to its flowability, liquid soil fills the cavities on its own during installation and ensures a stable material bond on a permanent basis. This means that no economically expensive mechanical compaction of the installed soil is necessary.

Liquid soil as a carrier material is not mentioned in any of the above referenced prior art documents.

In contrast to what is described in WO 02/28783 A, in which the running mining or excavation water is gradually flown out to provide increasingly weather minerals, the present invention claims the precipitation in the mine and thereby inhibit further weathering and decomposition of sulphides. According to the present invention, acidophilic chemolithotrophs Ferrooxidans are inhibited with an organic admixture and thus a coating on sulphides is formed. As a consequence, sulphides no longer decompose and no high-metal mining water is formed, which should be captured in a lake as required in WO 02/28783 A. In any case, the prior art reference does not disclose or suggest the use of liquid soil as a carrier material.

Furthermore, none of the prior art references described above relate to the physical stabilization of mines or excavated spaces in acidic soils. In very contrast to this, the present invention provides a technology in which a physical stabilization of the mine and/or excavated space, preferably in acidic soils, is provided and, at the same time, the problem of acidic leaching is solved.

In the sense of the present invention, excavated spaces in acidic soils are to be understood as and/or excavated spaces in the underground.

According to the present invention, liquid soil can also comprise primary sources of surface pollution, created by mining or melting, but also a defined proportion of organic components, in particular organic waste components.

In the sense of the present invention, the feature of organic components, in particular of organic waste components, refer to any carbon-containing material.

The organic waste components represent an organic source for the precipitation of toxic elements by microbial treatment in seeping mining waters (Acid Mine Drainage, AMD) during the stabilization of the mining work or alternatively in excavated spaces, in particular in acidic soils.

In a preferred embodiment of the present invention the content of the organic components in the liquid soil is at least 1 wt.-%, preferably at least 2 wt.-%, more preferably at least 3 wt.-%, more preferably at least 4 wt.-%, more preferably at least 5 wt.-%, more preferably at least 6 wt.-%, more preferably at least 7 wt.-%, more preferably at least 8 wt.-%, more preferably at least 9 wt.-%, most preferably at least 10 wt.-%, each with regard to the total content of the liquid soil. When the content of organic components in the liquid soil is below this value, the functionality of the organic components as a nutrient can probably not maintained.

According to the present invention, the content of organic components in the liquid soil is at most 12 wt.-%, preferably at most 11 wt.-%, each with regard to the total content of the liquid soil. The inventors have found that the self-compacting property of the liquid soil is maintained when the added organic waste material is up to 12 wt.-% with regard to the total content of the liquid soil. When the content of organic components in the liquid soil is above this value, the liquid soil loses this property and is no longer self-compacting.

This self-compacting property of the liquid soil is preferred for the present invention, since the organic components are bond in the liquid soil when the last is hardened so that no drifting away is possible, while however, the hardened liquid soil remains permeable so that a sustainable bioremediation by the microbial consortia is ensured.

In the sense of the present invention, the term "organic component" is to be understood as a component selected from the group preferably consisting of sewage sludge, contaminated soil or sediment and mixtures thereof.

In a preferred embodiment of the present invention, the organic component is sewage sludge.

The sewage sludge used in the liquid soil according to the present invention may be pre-treated or not pre-treated. In the sense of the present invention, the term "pre-treated sewage sludge" means a sewage sludge after previous recovery - by bioleaching or acid leaching - of useful components or the reduction of counterproductive components of P and N. The sulphate reducing bacteria (SRB) need low concentration of N and P. With the presence of high amounts of N or P, substantially heterotrophic bacteria activity takes place releasing undesired metals besides of N and P and thus contaminating additional the area. By pre-treatment of sewage sludge, the content of N and P can be reduced.

In a preferred embodiment of the present invention, the sewage sludge used in the liquid soil is pre-treated.

The pre-treated or not pre-treated sewage sludge represents an organic source for the precipitation of toxic elements in seeping mining waters (Acid Mine Drainage, AMD) since the use of a biodegradable organic waste material like sewage sludge ensures a continuous release of nutrients for the microbial consortia used for the inoculation.

According to one embodiment of the present invention, the content of sewage sludge in the liquid soil is at least 1 wt.-%, preferably at least 2 wt.-%, more preferably at least 3 wt.-%, more preferably at least 4 wt.-%, more preferably at least 5 wt.-%, more preferably at least 6 wt.-%, more preferably at least 7 wt.-%, more preferably at least 8 wt.-%, more preferably at least 9 wt.-%, most preferably at least 10 wt.-% each with regard to the total content of the liquid soil.

According to the present invention, the content of sewage sludge in the liquid soil is at most 12 wt.-%, preferably at most 11 wt.-% each with regard to the total content of the liquid soil.

The content of sewage sludge in the liquid soil might be adjusted in accordance with the overall amount of organic components in the liquid soil as defined above.

One of the advantages of the process according to the present invention is that the remediation zone is located in the source of contamination itself (i.e.in the mine and/or excavated spaces in acidic soils). Many prior art technologies disclose how indigenous bacteria of various genera and species were selected in the vicinity of soil contamination and used as effective treatments for some time, but not in-situ. Nonetheless, viable in-situ bioremediation zones can be maintained by introducing liquid soil into mines and/or excavated spaces in acidic soils, since the slowed AMD flow rates in the mine zone induce the decomposition of organic matter from organic waste material (such as sewage sludge) and the precipitation of heavy metals. Anaerobic bacteria are useful for this purpose, especially sulphate reducing bacteria (SRB).

According to the present invention, the carrier material containing liquid soil is inoculated with a solution of microbial consortia. In a preferred embodiment of the present invention, the solution of microbial consortia used for the inoculation is a mixture of sulphate reducing bacteria (SRB).

In a further preferred embodiment of the present invention, the solution of microbial consortia used for the inoculation of the carrier material containing liquid soil is a mixture of species selected from the group of the genera *Desulfovibrio, Desulfobacterium, Desulfomicrobium, Desulfomonas, Desulfotomaculum, Desulfobulbus, Desulfobacter, Desulfonema* or *Desulfosarcina,* whereby at least one species of them is in an amount of at least 10² CFU/g with regard to the total solid content of the liquid soil.

According to the present invention, the solution of the microbial consortia is an aqueous solution, whereby the concentration of the solution is in general 10⁶ - 10⁸ CFU/ml.

In a preferred embodiment of the present invention, the volume of the solution of microbial consortia used for the inoculation of the carrier material containing the liquid soil is at least 0.01 - 0.1 % of the volume of the liquid soil.

In a further preferred embodiment of the present invention, the ratio of the volume of the solution of microbial consortia used for the inoculation of the carrier material containing the liquid soil to the volume of the organic waste components is at least 1:100 and preferable 1:1000.

Biogenic elements from soil minerals and the utilization of nutrients from sewage sludge vary depending on the soil composition, which stimulates a function of the microbial precipitation activity in the subsoil. Therefore, the process according to the present invention uses a self-regulating organic nutrient source (sewage sludge) in the liquid soil phase as a nutrient reservoir. The invention described here takes advantage of the low solubility of biodegradable organic matter from sewage sludge to develop the growth of microbial consortia and the precipitation of toxic elements, as well as the sulfidation of bioformats in liquid soil.

It has been found that the problematic waste in the form of sewage sludge is a stable source of nutrients / electron donors when used together with liquid soil. In liquid soil, the associated organic and mineral components exert a strong bond strength with metals (including heavy metals), which are stimulated by the activity of microbial consortia in Acid Mine Drainage (AMD). This complicated biochemical mechanism explains why the use of sewage sludge in liquid soil is beneficial.

That said, the present invention on the one hand eliminates the use of a bioreactor and on the other hand enables a valuable use of organic waste together with mining waste for the purpose of stabilizing mines and for immobilizing pollutants. Sulphate reducing bacteria (SRB) are unable to grow directly on substrates such as cellulose, fats, nucleic acids, polymeric organic compounds, proteins and starch because they depend on other microorganisms to break down these substrates and ferment them into products that are then can be used by sulphate reducing bacteria.

In mines the process will start first with heterotrophic bacteria present in soil by consuming oxygen by TOC (total organic carbon) fermentation in organic waste material (such as sewage sludge) and rest part of the organics is used by strictly anaerobic sulphate reducing bacteria (SRB) for metal precipitation which will stop the formation of Acid Mine Drainage (AMD) as well as the percolation since no new oxygen enters in the mine.

Oxygen is consumed by biodegradation of the organic source in the liquid soil located in a closed mine and the redox potential Eh is changed to negative reduction values. The biodegradation of the organic source partially raises the temperature for the simulation of sulphate reducing bacteria (SRB) and stops the pH change of acidic mine waters from acidic to neutral. Metal mobility is also stopped by precipitating and filling pores in liquid soil and rock environments.

In particular, once metal sulphides or other sulphide-metallic components have formed, the complexed metals become relatively insoluble in water and tend to precipitate on other mineral particles contained in the liquid soil. The metals are thereby permanently held in the mines and in the underground zone, which prevents further water-based migration in the form of Acid Mine Drainage (AMD).

A further advantage of the present invention is that after filing the excavated areas of a mine with the inoculated carrier material containing the liquid soil, no further inoculation with microbial consortia is used. In very contrast to the prior art, the addition of microbial consortia (inoculation) in the carrier material containing the liquid soil is applied only once (at the beginning). There is no need of continuous adding of new bacteria, since according to the process of the present invention, the initial added microbial consortia create successively metal precipitates that clog mesopores and micropores in liquid soil.

According to the present invention and as explained above an in-situ precipitation of toxic elements as well as a neutralization of acidic water occurs during the percolation of acid mine drainage (AMD) in the mine and/or excavated spaces in acidic soils.

As known, precipitation is the formation of a separable solid substance from a solution, either by converting the substance into an insoluble form or by changing the composition of the solvent to diminish the solubility of the substance in it.

In the sense of the present invention, the expression "in-situ precipitation" means that the inoculated carrier material containing liquid soil is being pumped directly into the ore mine body via holes or boreholes and/or excavated spaces in acidic soils. Due to this in-situ procedure the circulation of acid drainage through the porous rock stops on site, stopping thereby also the dissolution of the rest ore / soil as well as the mobilization of toxic metals. Since the procedure is taken place in the mine and/or excavated spaces in acidic soils, it is obvious that the in-situ precipitation and/or neutralization of acidic water during the percolation of acid drainage in the mine and/or excavated spaces in acidic soils, can carried out under non-sterile conditions.

Furthermore, according to the method of the present invention the precipitation and/or neutralization of acidic water during the percolation of acid drainage in the mine and/or excavated spaces in acidic soils, is carried in a closed space without the ingress of oxygen.

In a preferred embodiment of the present invention, the precipitation and/or neutralization of acidic water is carried out under infiltration (saturated conditions) or non-infiltration (unsaturated conditions) which are formed according to the percolation of the mining and/or acidic waters.

Accordingly, the pH of the acid drainage after the precipitation and neutralization is 6 or more, preferably 7 or more.

According to an embodiment of the present invention, the precipitation is carried out in the mine and/or excavated spaces in acidic soils (in-situ) at any given temperature. Preferably the precipitation is carried out in the mine at a temperature of at least 2° C, preferably of at least 6° C, more preferably of at least 8° C, more preferably of at least 12° C, more preferably of at least 16° C, more preferably of at least 18° C, more preferably of at least 20° C.

Moreover, the present invention relates to a liquid soil comprising organic material and microbial consortia for use in a method for backfilling a mine and/or excavated spaces in acidic soils according to the above-mentioned process.

Furthermore, the present invention relates to the use a liquid soil according to the present invention in a method for backfilling a mine and/or excavated spaces in acidic soils.

Moreover, the present invention relates to the use a liquid soil according to the present invention in a method for backfilling a mine and/or excavated spaces in acidic soils according to the above-mentioned process.

### Example

The present invention is illustrated by the following example:
0,5 kg and 1 kg of liquid soil used

The process according to the invention was carried out in 2 columns. The columns were first filled with 0.5 and 1 kg of liquid soil. 1 liter of acid mine drainage water from mine with pH 2 was used for percolation. In parallel, a consortium of SRB bacteria was propagated to an amount of 0.01% based on the liquid soil to be prepared. The active SRB bacteria isolated were *Desulfivibrio desulfuricans* (in concentration 105 Colony forming unit (CFU)/g) and *Acidithiobacillus thiooxidans* (103 Colony forming unit (CFU)/g). They have been identified by the accredited microbiological laboratory using Polymerase Chain Reaction (PCR) tests. An organic component for the bacteria was added (for a total of 7%). After 5 days of AMD percolation, the bacteria precipitated sulfidic minerals in the columns. The bottom liquid components were as follows:

| Sample | Content (kg) |
|---|---|
| Soil/sediment | 1,395 |
| Na bentonite | 0,025 |
| Cement | 0,025 |
| Sewage sludge | 0,105 |

The outside temperature during the entire procedure averaged 10° C (the highest 18° C, the lowest 5° C). The pH value rises from 2 to 7 after 5 to 10 days of percolation. The production of iron and sulfidic minerals was evidence of the precipitation of metals and suitable AMD remediation. The procedure was carried out under non-sterile conditions for 2 weeks. The metal concentration in AMD after percolation was 109 mg/l Cu, 48 mg/l Zn, 35 mg/l As (Table 1). All of the iron and sulphide precipitation minerals that originally covered all soil particles (which are responsible for the brown colour of the soil) were formed during the bioremediation process. Percolated AMD had decreased metals / metalloids and non-metallic concentrations.

The larger the volume of the seepage liquid soil, the lower the concentration of the extracted metals (Table 1). AMD is neutralized during biochemical precipitation as the pH rises from pH 2 to pH 8.

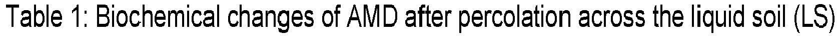

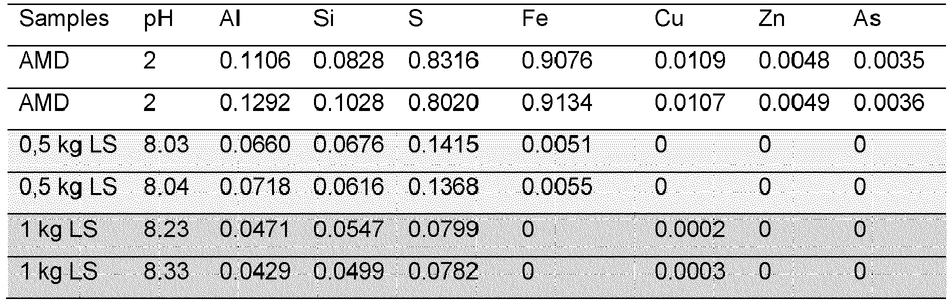

## Claims

1. A method for backfilling a mine and/or of excavated spaces of a soil, in particular of an acidic soil, comprising at least the following process steps:
a) providing a carrier material;
b) inoculating the carrier material provided in step a. with a solution of microbial consortia; and
c) filling the excavated areas of the mine and/or soil with the inoculated carrier material of step b,
**characterized in that** the carrier material contains liquid soil and organic components as nutrient for the microbial consortia.

2. The method according to claim 1, **characterized in that** after filing the excavated areas of the mine and/or soil in step c, no further inoculation of the carrier material containing the liquid soil with microbial consortia is used.

3. The method according to claim 1 or 2, **characterized in that** the organic components are selected from the group consisting of sewage sludge, contaminated soil, contaminated sediments, and mixtures thereof.

4. The method according to anyone of claims 1 to 3, **characterized in that** the liquid soil contains components selected from the group consisting of tailings, excavation material, minerals, separations, overburden from previous mining or processing, overburden from actual mining or processing, contaminated rocks or non-contaminated rocks, soil, sediments, limestone, lime slag, and mixtures thereof.

5. The method according to anyone of claims 1 to 4, **characterized in that** the liquid soil further contains at least one component selected from the group consisting of bentonite, cement, clays, carbonates, geopolymers and mixtures thereof.

6. The method according to anyone of claims 1 to 5, **characterized in that** the solution of microbial consortia used for the inoculation of the carrier material containing the liquid soil is a mixture of sulphate reducing bacteria (SRB).

7. The method according to anyone of claims 1 to 6, **characterized in that** the solution of microbial consortia used for the inoculation of the carrier material containing the liquid soil is a mixture of species from the genera: *Desulfovibrio, Desulfobacterium, Desulfomicrobium, Desulfomonas, Desulfotomaculum, Desulfobulbus, Desulfobacter, Desulfonema or Desulfosarcina,* whereby at least one species of them is in an amount of at least 10² CFU/g with regard to the total solid content of the liquid soil.

8. The method according to anyone of claims 1 to 7, **characterized in that** the content of the organic components in the liquid soil is at least 1 wt.-%, preferably at least 2 wt.-%, more preferably at least 3 wt.-%, more preferably at least 4 wt.-%, more preferably at least 5 wt.-%, more preferably at least 6 wt.-%, more preferably at least 7 wt.-%, more preferably at least 8 wt.-%, more preferably at least 9 wt.-%, most preferably at least 10 wt.-% each with regard to the total content of the liquid soil.

9. The method according to anyone of claims 1 to 8, **characterized in that** the volume of the solution of the microbial consortia with a concentration of 10⁶ to 10⁸ CFU/ml used for the inoculation of the carrier material containing the liquid soil is at least 0.01% of the volume of the liquid soil.

10. The method according to anyone of the claims 1 to 9, **characterized in that** the ratio of the volume of the solution of microbial consortia used for the inoculation of the carrier material containing the liquid soil to the volume of the organic waste components is at least 1:1000.

11. The method according to anyone of claims 1 to 10, **characterized in that** the organic component is sewage sludge.

12. The method according to anyone of claims 1 to 11, **characterized in that** during the process an in-situ precipitation of toxic elements and a neutralization of acidic water occurs.

13. A liquid soil, comprising organic material and microbial consortia for use in a method for backfilling a mine and/or excavated spaces of a soil according to anyone of claims 1 to 12.

14. Use of a liquid soil according to claim 13 in a method for backfilling a mine and/or excavated spaces of a soil.

15. Use according to claim 14, wherein the method is defined according to anyone of claims 1 to 12.
